(19) Europäisches Patentamt
European Patent Office
Office européen des brevets

(11) **EP 1 813 489 B1**

## (12) EUROPÄISCHE PATENTSCHRIFT

(45) Veröffentlichungstag und Bekanntmachung des Hinweises auf die Patenterteilung:
**27.06.2018  Patentblatt 2018/26**

(51) Int Cl.:
***B60T 8/1766*** *(2006.01)*          ***B60T 8/26*** *(2006.01)*

(21) Anmeldenummer: **07001245.5**

(22) Anmeldetag: **20.01.2007**

(54) **Verfahren zur Bremskraftregelung eines Kraftfahrzeugs**

Method for regulating braking force of a motor vehicle

Procédé destiné au réglage de la force de freinage d'un véhicule automobile

(84) Benannte Vertragsstaaten:
**DE FR IT NL SE**

(30) Priorität: **26.01.2006  DE 102006003701**

(43) Veröffentlichungstag der Anmeldung:
**01.08.2007  Patentblatt 2007/31**

(73) Patentinhaber: **MAN Truck & Bus AG**
**80995 München (DE)**

(72) Erfinder:
• **Franke, Olaf**
**80807 München (DE)**

• **Kelle, Hans-Jochen**
**80636 München (DE)**

(74) Vertreter: **Liebl, Thomas et al**
**Neubauer - Liebl - Bierschneider**
**Patentanwälte**
**Münchener Straße 49**
**85051 Ingolstadt (DE)**

(56) Entgegenhaltungen:
**EP-A- 1 225 110          DE-A1- 19 941 482**
**JP-A- 2002 160 614      US-A- 6 089 677**

**Beschreibung**

Die Erfindung betrifft ein Verfahren zur Bremskraftregelung eines Fahrzeugs nach Anspruch 1 und eine entsprechende Vorrichtung nach Anspruch 13. Ein gattungsgemäßes Verfahren ist aus der DE 199 58 324 A1 bekannt. Das Dokument JP2002 160614A beschreibt eine Bremskraftverteilungseinrichtung, die unerwünschte Bremsgeräusche beim Kriechen minimiert, ohne expliziten Rücksicht auf angetriebene Achse und nicht angetriebene Achse. In dieser Schrift wird von einer Druckluftbremsanlage mit einem Antiblockiersystem (ABS) ausgegangen und dieser Anlage, abhängig von Fahrerbremswunsch, ein möglich Verzögerungswert auferlegt, der zwischen einem Mindestverzögerungswert und einem Maximalverzögerungswert liegt. Um dies zu erreichen, wird, bei nicht völlig intaktem Vorderachsbremskreis, der Druck des Hinterachsbremskreises erhöht, so dass ein Mindestverzögerungswert, abhängig vom Bremswunsch des Fahrzeugführers, erreicht wird. Die Verzögerungswerte werden in einem Rechner über Drehzahländerungen bezogen auf die Zeit errechnet. Die vorbeschriebene technische Lösung ist ferner für die Verwendung in Verbindung mit elektronischen Bremssystemen vorgesehen. Hierbei wird zwar das Auftreten eines nicht ganz intakten vorderen Bremskreises berücksichtigt, jedoch weder die momentanen Fahrbahnverhältnisse noch das Vorhandensein spezieller im Antriebsstrang vorgesehener Komponenten, wie etwa Wandlerschaltkupplung (WSK) oder Wandlergetriebe (WG).

Eine Wandlerschaltkupplung (WSK) ist eine verschleißfreie Kupplung, die anstelle einer Reibungskupplung zwischen Motor und Getriebe vorgesehen ist. Wandlerschaltgetriebe (WG) benötigen keine Reibungskupplung wobei die Wandlerstufe dann im höheren Geschwindigkeitsbereich überbrückt wird und dann nicht mehr als Wandler wirkt.

Die beiden genannten Einrichtungen (WSK und WG) haben die Eigenschaft, dass sie kurz vor Beendigung eines Bremskraftvorganges oder kurz vor dem Wegfahren des Fahrzeugs (Wegfahrgang ist eingelegt) ein vom Motor über den Wandler hervorgerufenes Moment über das Getriebe auf die Antriebsache eintreiben, so dass sich das Fahrzeug, bspw. auf waagrechter Fahrbahn in Bewegung setzt. Die Größe des Moments, das an die Antriebsachse über den Wandler abgegeben wird, kann erheblich sein, abhängig z. B. vom Hubvolumen des Antriebsmotors. Das Fahrzeug muss demnach in der Stufe "D" (Drive), wenn es sich nicht bewegen soll, auch auf waagrechter Fahrbahn im gebremsten Zustand sein (natürlich auch an einer Steigung und im Gefälle). Im Beispiel ist hier eine leere oder teilbeladene Sattelzugmaschine (SZM) mit WSK genannt, die eine Bremsdruckverteilung von etwa 2:1 zwischen Vorderachse und Hinterachse hat.

Grundsätzlich gilt das nachfolgend dargestellte für Kommunalfahrzeuge, Müllsammeifahrzeuge, hochgeländegängige Fahrzeuge, Feuerwehrfahrzeuge und Busse, aber auch andere Kraftfahrzeuge, die mit einem Wandlergetriebe ausgerüstet sind.

Bei einer Bremsung in die Schrittgeschwindigkeit hinein oder bis in den Fahrzeugstillstand und aus dem Fahrzeugstillstand heraus, schiebt das Fahrzeug, abhängig von einem niedrigen Reibbeiwert ($\mu$) zwischen Rad und Fahrbahn über die Vorderachse hinweg oder es dreht die Antriebsachse (Hinterachse) durch. Das Fahrzeug ist in diesen Fahrzuständen nicht sicher beherrschbar. Aufgabe der Erfindung ist es, das Fahrverhalten eines Fahrzeugs mit einer Wandlerschaltkupplung (WSK) oder einem Wandlergetriebe (WG) auch bei niedrigem Reibungskoeffizienten ($\mu$) zwischen Rad und Fahrbahn und beim Wegfahren aus dem Stillstand und im niedrigen Geschwindigkeitsbereich (Schrittgeschwindigkeit), zu verbessern. Die Aufgabe wird erfindungsgemäß durch die kennzeichnenden Merkmale des Anspruchs 1 gelöst.

Dadurch dass, wenn ein Fahrgang eingelegt wird und der Antriebsmotor über die Wandlerschaltkupplung (WSK) oder das Wandlergetriebe ein Antriebsmoment auf die Antriebsachse ausübt, die Bremskraft an der Vorderachse reduziert und an der Antriebsachse (Hinterachse) erhöht wird, kann das Fahrzeug nicht mehr über die Vorderasche "schieben" und nicht mehr an der Antriebsachse durchdrehen.

Das Fahrzeug ist in dem genannten Betriebszustand eindeutig beherrschbar.

Im nachfolgenden Text wird von einer Sattelzugmaschine (SZM) mit einer WSK ausgegangen. Wie aber bereits erwähnt, ist die Erfindung auch auf andere Fahrzeuge mit entsprechender Ausrüstung anwendbar.

Weiterhin ist mit dem Ausdruck "Bremskraft" diejenige Kraft gemeint, die zwischen Rad und Fahrbahn vorhanden ist. Momente oder Bremsdrücke in den Bremszylindern müssen entsprechend umgerechnet werden. Bei einer Bremsung werden jedoch Drücke eingesteuert.

Eine leer fahrende oder teilbeladene SZM hat eine Bremsdruckverteilung von etwa 2:1 zwischen Vorderachse und Hinterachse, d. h., dass die Vorderachse etwa doppelt so stark gebremst wird, wie die Hinterachse. Dies muss so sein, weil die leere SZM eine Vorderachslast von z. B. 7 to hat und die Hinterachse eine Achslast von ca. 2,5 to aufweist. Daraus ergibt sich der unterschiedliche Bremsdruck zwischen Vorderachse und Hinterachse.

Ferner tritt beim Wegfahren aus dem Fahrzeugstillstand bzgl. der Bremsdruckverteilung, die eine entsprechende Bremskraftverteilung ergibt, das Problem auf, dass bei gleichmäßigem Abbau des Bremsdruckes der Druck an der Antriebsachse bereits sehr weit abgebaut ist und eine Antriebskraft über die WSK auf die Antriebsräder wirkt. Die Vorderachse jedoch ist noch mit einem relativ hohen Bremsdruck gebremst, solange, bis der restliche Bremsdruck abgebaut ist. Falls der Fahrzeugführer einen Bremswunsch über das Bremspedal eingibt, bleibt dieses genannte Problem vom Fahrzeugstillstand bis hin zur Schrittgeschwindigkeit und beim Herunterbremsen in den Fahrzeugstillstand erhalten.

In dem Falle, dass ein guter Reibungskoeffizient zwischen Rad bzw. allen Rädern und der Fahrbahn vorhanden ist, merkt der Fahrzeugführer nichts von den unterschiedlichen Bremskräften zwischen den Rädern und der Fahrbahn.

Das kritische Fahrverhalten des Fahrzeugs tritt bei niedrigem Reibungskoeffizienten zwischen den Rädern und der Fahrbahn auf, z. B. bei Schnee, Eis und bei verschlammter Fahrbahn. Wenn bspw. die Vorderachse auf griffigem Untergrund steht, die Antriebsachse jedoch auf vereistem Untergrund, dann drehen die Antriebsräder bei gewolltem Wegfahren durch. Das Fahrzeug ist in diesem Fahrzustand nicht mehr beherrschbar. Auch bei gleichen Reibungskoeffizienten kommt es zum Schlupf an Vorder- oder Hinterachse.

Ein weiterer Problemfall tritt bspw. dann auf, wenn die Räder der Vorderasche auf vereistem Untergrund stehen und die Räder der Hinterachse auf griffigem Untergrund. Bei einem gewollten Wegfahren schiebt dann das Fahrzeug unlenkbar, weil die Vorderachse noch gebremst ist und die Bremskraft an der Hinterachse bereits kleiner ist als die Antriebskraft, die auf die Hinterräder wirkt.

In der Praxis treten die zwei genannten Problemfälle, sowie alle dazwischen liegenden Problemfälle auf. Dies kann den Fahrzeugführer vor überraschende Probleme stellen und zu unkontrollierten Fahrzeugreaktionen führen. Weiterhin tritt das genannte Problem aber nicht nur beim Wegfahren des Fahrzeugs auf, sondern auch bei langsamer Fahrt (Schrittgeschwindigkeit), wenn ein Gang eingelegt ist, der Fahrzeugführer einen Bremswunsch über das Bremspedal eingibt und durch den Antriebsmotor über die WSK eine Antriebskraft auf die Antriebsräder wirkt. Erfindungsgemäß werden die Bremsdrücke in den beschriebenen Fällen zwischen Vorderachse und Hinterachse so verteilt, dass das Kraftfahrzeug in diesen Fällen einwandfrei beherrschbar ist. Das erfindungsgemäße Verfahren ist konform mit der EU-Richtlinie 71/320/EWG bzw. ECE-R13, in der es erlaubt ist, die Bremsdrücke an den einzelnen Achsen zu verändern, wenn sichergestellt ist, dass die vorgeschriebene Fahrzeugverzögerung eingehalten wird.

Im nachfolgenden Teil werden Fig. 1 und Fig. 2, die schematische Diagramme für die Bremsdruckoptimierung enthalten, diskutiert. Die Fig. 3 zeigt Momente und Kräfte am Antriebsrad. Die Fig. 4 zeigt die Anordnung des Triebstranges.

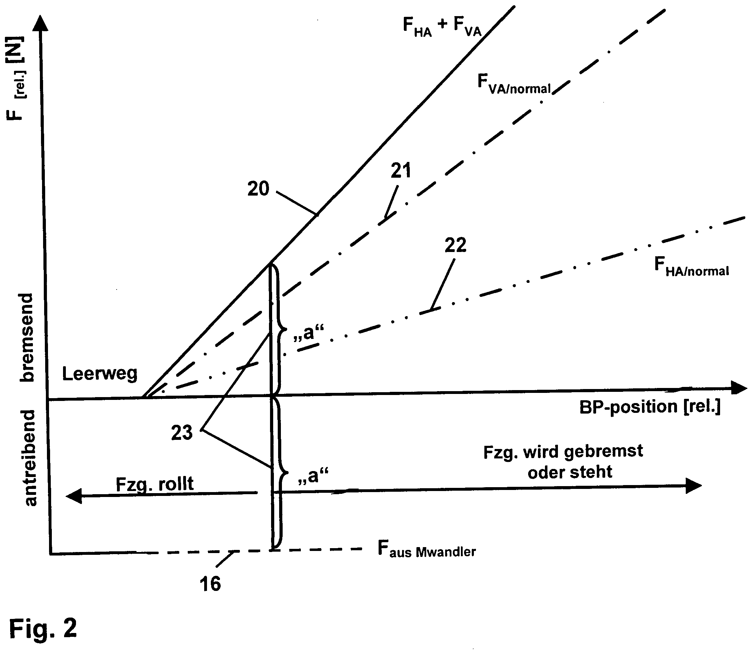

Die Fig. 2 zeigt den Stand der Technik der Bremskraftverteilung zwischen Vorderachse [VA] und Hinterachse [HA]. BP-position [rel.] steht für die relative Bremspedalposition [brake pedal position].

Die Bremskraft F [rel.] steht für die Bremskraft zwischen Rad und Fahrbahn. Nach einem Leerweg im Bremspedal sprechen die Bremsen der Vorderachse [VA] und der Hinterachse [HA] mit den Kräften $F_{VA/normal}$ 21 und $F_{HA/normal}$ 22 an. Es ist zu erkennen, dass die eingesteuerte Bremskraft 21 an der Vorderachse etwa doppelt so hoch ist, wie die eingesteuerte Bremskraft 22 an der Hinterachse. Die Linie 20 ist die Summe der Kräfte 21 und 22 von Vorderachse und Hinterachse. Die Höhe "a" der Linie 23 besagt, dass aufgrund des Vorsehens einer Wandlerschaltkupplung (WSK) zwischen Motor und Getriebe und der somit durch das Abtriebsmoment des Antriebsmotors und die Übersetzungen von Getriebe und Hinterachsgetriebe bedingte, resultierende Kraft am Rad, zumindest die Bremskräfte $F_{VA/normal}$ und $F_{HA/normal}$ aufgebracht werden müssen, um die benötigte Haltekraft aufzubringen, damit das Fahrzeug eingebremst ist.

Die Linie 16 ist die antreibende Kraft an der Hinterachse aus dem Wandlermoment $F_{ausMWand-ler}$. Aus der Fig. 2 ist auch zu erkennen, dass es durch die Einsteuerung der hohen Bremskraft an der Vorderachse, in der Schrittgeschwindigkeit und beim Fahren aus dem Fahrzeugstillstand, je nach den Fahrbahnverhältnissen, zu Problemen kommen kann, wie z. B. das Schieben über die Vorderachse oder das Durchdrehen der Hinterachsräder.

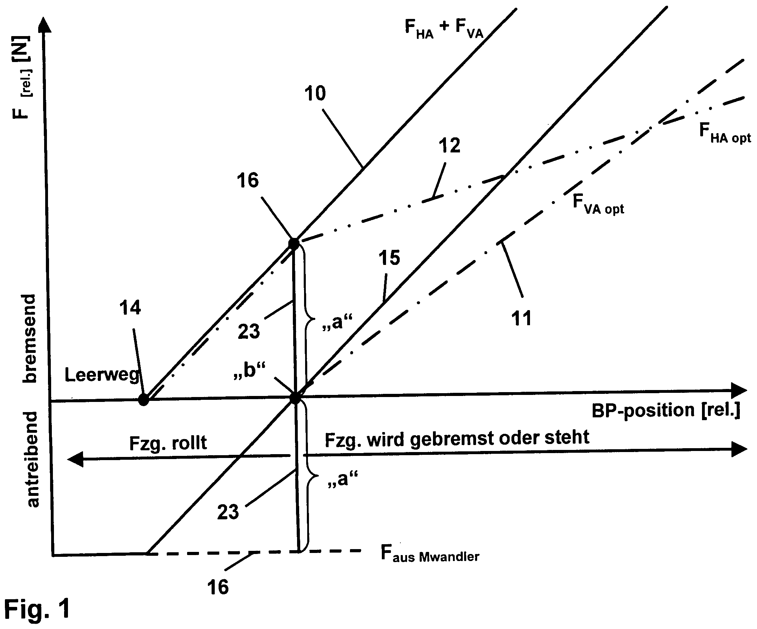

Die Fig. 1 zeigt das Verfahren in einem Diagramm nach der Erfindung. Die Gerade 10 zeigt die Summe der Bremskräfte $F_{VA} + F_{HA}$ aus den optimierten Bremskräften $F_{VA/opt}$ an der Vorderachse und der optimierten Bremskraft $F_{HA/opt}$ an der Hinterachse, abhängig von der Bremspedalposition BP-position [rel.]. Die Bremskraft 11 an der Vorderachse ist von dem Punkt 14 auf der Abszisse bis zum Punkt "b" auf "Null" (kein Bremsdruck) gehalten. Die Vorderachse wird also nicht gebremst.

Die Höhe "a" ist, wie in der Beschreibung der Fig. 2 bereits beschrieben, die erforderliche Bremskraft zum Halten des Fahrzeugs auf waagrechter Fahrbahn, das aus dem Wandlermoment und den Übersetzungen bis einschließlich der Bremse, erforderlich ist. Der Betrag "a" kann rechnerisch pro Fahrzeugtyp und Motortyp und den entsprechenden Übersetzungen errechnet werden, soll(te) aber versuchsmäßig zumindest in einer Ausführung nachgeprüft werden.

Ab dem Punkt "b" steigt der Bremsdruck 11 an der Vorderachse entsprechend der BPpostion [rel.] an.

Dadurch, dass die Vorderachse im Bereich links von "b" im Diagramm nicht gebremst ist, ist sie bei allen Fahrbahnverhältnissen lenkbar. In dem genannten Bereich rollt das Fahrzeug. Damit sich das Fahrzeug dem Fahrerwunsch entsprechend verhält, muss die Bremskraft 11, die der Vorderachse "weggenommen" wurde, der Bremskraft 12 der Hinterachse zugeführt werden, was im Bereich von Punkt 14 bis Punkt 16 des Diagramms dargestellt ist. Dadurch ist das Fahrzeug im Bereich links vom Punkt "b" einwandfrei beherrschbar. Rechts vom Punkt "b" ist der Bereich, in den das Fahrzeug kommt, wenn es im Bereich der Schrittgeschwindigkeit verzögert wird, oder wenn es bereits steht. Wenn das Fahrzeug in die Schrittgeschwindigkeit kommt, wird im Bereich rechts von "b" die Vorderachse weniger stark gebremst als die Hinterachse, was der Fahrstabilität zugute kommt. Wenn das Fahrzeug im Bereich rechts von "b" steht und der Bremswunsch BP-position [rel.] sich in diesem Bereich befindet, ist der Vorteil dieser Erfindung ebenfalls vorhanden, weil die Vorderachse weniger gebremst wird, als die Hinterachse. Ein sicheres Halten ohne Verspannung zwischen der Vorder- und der Hinterachse ist somit gegeben.

Der Bereich rechts von "b" ist dann ein Betriebsbereich des Fahrzeugs, wenn das Fahrzeug in der Schrittgeschwindigkeit verzögert werden muss, steht oder sicher eingebremst sein soll.

Die Gerade 15 ist jene Summenbrems- und Antriebskraft an der Vorderachse und der Hinterachse, die letztendlich antreibend oder verzögernd auf das Fahrzeug wirkt.

Im Bereich, in dem die Gerade 15 unterhalb der Abszisse liegt, wirkt die Antriebskraft durch das Wandlermoment so, dass das Fahrzeug zum Rollen kommt.

In allen beschriebenen Fällen wird durch die Bremspedalposition BP-position [rel.] und das im Rechner abgelegt Programm vom Fahrzeugstillstand heraus und in den Betriebsbereichen Kriechfahrt, Schrittgeschwindigkeit bis über diese Betriebsbereiche, ruckfrei und für den Fahrer nicht merkbar geregelt.

Nachfolgend ist mathematisch der Zusammenhang des Verfahrens allgemein über die Momente dargestellt. Die Momente können jeweils mittels der entsprechenden Radradien in Kräfte umgerechnet werden.

Momentverteilung:

Die Summe der optimierten Bremsmomente entspricht der Summe der ursprünglichen Momente:

I wenn das Fahrzeug langsam rollt, gilt:

$$M_{HA/normal} + M_{VA/normal} < M_{Wandler}$$

dann ist für die

$$\text{Hinterachse } M_{HA/opt.} = M_{HA/normal} + M_{VA/normal}$$

$$\text{Vorderachse } M_{VA/opt.} = 0$$

II Wenn das Fahrzeug gebremst wird oder wenn das Fahrzeug steht, gilt:

$$M_{VA/normal} + M_{HA/normal} \geq M_{Wandler}$$

$$\text{Hinterachse}$$
$$M_{HA/opt.} = M_{HA/normal} + M_{Wandler\,an\,Nabe} * \frac{M_{VA/Normal}}{(M_{VA/normal} + M_{HA/normal})}$$

$$\text{Vorderachse}$$
$$M_{HA/opt.} = M_{VA/normal} - M_{Wandler\,an\,Nabe} * \frac{M_{VA/normal}}{(M_{VA/normal} + M_{HA/normal})}$$

wobei

$$M_{Wandler\,an\,Nabe} = M_{Motor} * \underbrace{\ddot{U}_{Wandler} * i_{Getriebe} * i_{HA}}_{\text{Übersetzung bis zur Hinterachse}}$$

Diskussion

4

Zu I:    Wenn die Summe der Bremsmomente (normal) von Vorderachse und Hinterachse kleiner, als das Wandlerantriebsmoment an der Hinterachse ist, so wird das Bremsmoment (normal) an der Hinterachse um das Bremsmoment (normal) der Vorderachse erhöht. Das Bremsmoment (opt.) an der Vorderachse ist dann Null.

Zu II:   Ist die Summe der Bremsmomente von Vorderachse und Hinterachse größer oder gleich dem Wandlerabtriebsmoment an der Hinterachse, dann gilt: Das optimierte Bremsmoment an der Hinterachse $M_{HA/opt}$ ergibt sich aus dem normalen Bremsmoment an der Hinterachse $M_{HA/normal}$ **zuzüglich** dem erforderlichen Bremsmoment an der Hinterachse multipliziert mit dem Faktor, der sich als Quotient aus dem Bremsmoment (normal) an der Vorderachse ($M_{VA/normal}$) und dem Gesamtbremsmoment ($M_{VA/normal} + M_{HA/normal}$) ergibt, das das zusätzlich an der Hinterachse wirkende Antriebsmoment des Wandlers kompensiert.

Das optimierte Bremsmoment an der Vorderachse $M_{VA/opt.}$ ergibt sich aus dem normalen Bremsmoment an der Vorderachse ($M_{VA/normal}$) **minus** dem erforderlichen Bremsmoment für das Wandlermoment an der Nabe ($M_{Wandler\ an\ Nabe}$) multipliziert mit dem Faktor, der sich als Quotient aus dem Bremsmoment (normal) an der Vorderachse ($M_{VA/normal}$) und dem Gesamtbremsmoment ($M_{VA/normal} + M_{HA/normal}$) ergibt. Dieser Quotient repräsentiert die Bremsmomentverschiebung, bzw. die Verteilung des Gesamtbremsmoments auf die Achsen, durch Beladungseinfluss.

Indirekt sind in den Gleichungen I und II die Beladungszustände erfasst, weil durch die lastabhängige Bremskraftregelung (ALB) die normalen Bremsmomente bzw. Bremskräfte vorgegeben sind. So ist bspw. bei einer leeren Sattelzugmaschine die Vorderachse normalerweise doppelt so stark gebremst, wie die Hinterachse. Durch die Erfindung werden die Bremskräfte anders verteilt, was in diesem Fahrzeugzustand (leeres Fahrzeug) eine erhebliche Verbesserung bedeutet. Bei einer vollbeladenen oder teilbeladenen Sattelzugmaschine wird durch die ALB für die Hinterachse ein höheres Bremsmoment bzw. eine höhere Bremskraft vorgegeben. Abhängig von diesen vorgegebenen Bremsmomenten wird sowohl die Vorderachse wie auch die Hinterachse unterschiedlich nach den Gleichungen I und II gebremst.

Da die Summenbremskraft in den dargestellten Fällen jeweils gleich ist, handelt es sich auch bei den in Figur 1 und 2 abgebildeten Funktionskurven 10 und 20 um Geraden, die deckungsgleich sind.

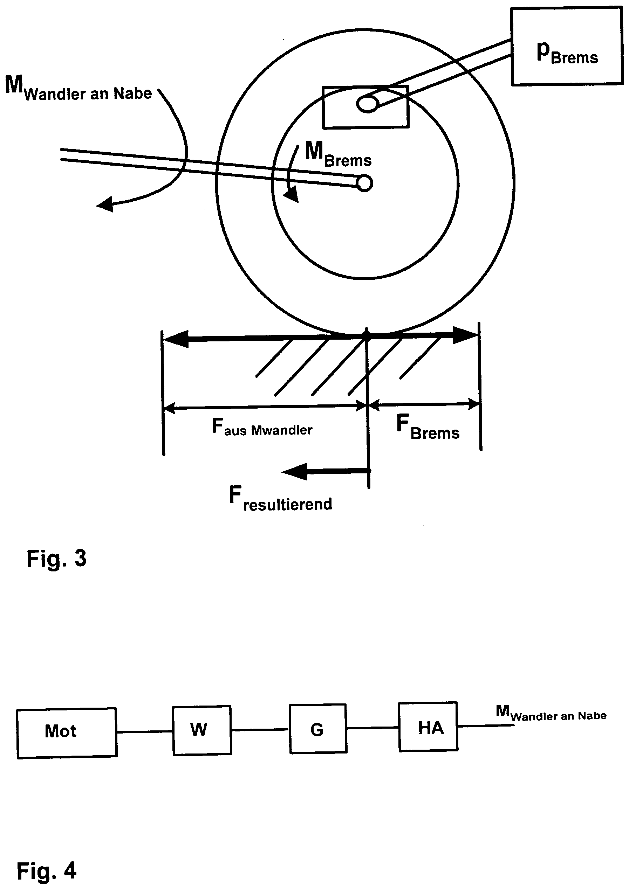

Die Fig. 3 zeigt die Momente und Kräfte am Hinterachsrad. Die Momente und die Bremsdrücke am Rad müssen umgerechnet werden in Kräfte zwischen Reifen und Fahrbahn, damit man beurteilen kann, ob das Rad abtreibend oder bremsend wirkt. Im Bild wirkt das Rad antreibend.

Die Fig. 4 zeigt die Anordnung des Antriebstranges mit einem Motor (Mot), einem Wandler (W), einem Getriebe (G) sowie einer angetriebenen Hinterachse.

Wie die vorigen Ausführungen gezeigt haben, wird bei Fahrzeugen mit einem Wandler auch bei Stillstand und eingelegtem Gang über den Wandler ein Drehmoment auf die Antriebsräder übertragen. Dieses Antriebsmoment muss durch ein entsprechendes Bremsmoment kompensiert werden, wenn das Fahrzeug in diesem Fall noch nicht anrollen soll.

Ein weiteres Problem kann bei einem Gangwechsel auftreten. Wird unter den zuvor genannten Bedingungen der Fahrgang gewechselt, kommt es, insbesondere wenn der gewählte Gang kleiner als der vorher eingelegte ist, zu einer sprunghaften Erhöhung des Antriebsmoments. Dieses kann zu einem ungewollten Anrollen des Fahrzeugs führen, da die Erhöhung des Antriebsmoments unerwartet für den Fahrer erfolgt.

Um das zuvor geschilderte Problem zu lösen, bietet es sich vorzugsweise an, ausgehend von der üblichen Bremsdruckkennlinie, die in Abhängigkeit des den Fahrerbremswunsch widerspiegelnden Bremspedalwegs festgelegt ist, den Bremsdruck um einen Betrag zu erhöhen, der dem vom Wandler an die wenigstens eine angetriebene Achse übertragenen Antriebsmoment entspricht. In einer besonderen Ausführungsform erfolgt die Erhöhung des Bremsdrucks, indem die Summe des Bremsdrucks um das vom Wandler an die wenigstens eine angetriebene Achse übertragene Antriebsmoment erhöht wird. In einer alternativen Ausführungsform erfolgt die Erhöhung des Bremsdrucks dagegen ausschließlich an der wenigstens einen angetriebenen Achse.

Eine weitere spezielle Ausführungsform der Erfindung sieht vor, dass im unteren Bremspedalweg der zusätzliche Bremsdruck auf einen vorgebbaren Endwert begrenzt wird. Zur Ermittlung des vorgebbaren Endwerts ist in der Steuerung vorzugsweise ein veränderbarer Faktor hinterlegt, der mit dem Wert des in Abhängigkeit der Bremspedalstellung eingesteuerten Bremsdrucks multipliziert wird. Auf diese Weise kann ferner sichergestellt werden, dass bei gelöstem Bremspedal kein Bremsdruck in die Betriebsbremse eingesteuert wird.

**Bezugszeichenliste**

10    Funktionskurve, die die Summe der an der Vorder- und der Hinterachse wirkenden Bremskräfte mit Optimierung repräsentiert ($F_{VA} + F_{HA}$);

11    Funktionskurve, die die an der Vorderachse wirkende optimierte Bremskraft repräsentiert;

12    Funktionskurve, die die an der Hinterachse wirkende optimierte Bremskraft repräsentiert;

14    Zustandspunkt (Beginn des Bremskraftaufbaus);

15    Funktionskurve, die die auf das Fahrzeug beschleunigend oder verzögernd wirkende Summenkraft an der Vorder- und der Hinterachse repräsentiert;

16    Funktionskurve, die die an der Hinterachse antreibende Kraft repräsentiert;

20    Funktionskurve, die die Summe der auf die Vorder- und die Hinterachse ohne zusätzlichen Bremseingriff wirkenden Bremskräfte repräsentiert;

21    Funktionskurve, die die auf die Vorderachse ohne zusätzlichen Bremseingriff wirkende Bremskraft repräsentiert;

22    Funktionskurve, die die auf die Hinterachse ohne zusätzlichen Bremseingriff wirkende Bremskraft repräsentiert;

23    benötigte Bremskraft, um das Wandlerantriebsmoment zu kompensieren.

**Patentansprüche**

1. Verfahren zum Bremsen eines Kraftfahrzeugs, das über eine Betriebsbremse, über eine nicht angetriebene Achse, über eine von einer Antriebseinheit mittels eines Antriebsstrangs angetriebene Achse sowie über einen hydraulischen Drehmomentwandler, der im Antriebsstrang angeordnet ist, verfügt, wobei ein Bremseingriff mit der Betriebsbremse achs- und/oder radbezogen erfolgt, und die an der angetriebenen Achse vorgesehenen Räder unabhängig von den an der nicht angetriebenen Achse vorgesehenen Räder mit einer Bremskraft beaufschlagt werden, **dadurch gekennzeichnet, dass**, sobald ein Antriebsmotor bei Stillstand oder bei langsamer Fahrt des Kraftfahrzeugs antreibend über den Antriebsstrang auf die angetriebene Achse wirkt, in Abhängigkeit von einer Bremsanforderung der Bremseingriff derart vorgenommen wird, dass die Bremskräfte zwischen Fahrbahn und Rad an den Rädern der nicht angetriebenen Achse so verringert und die Bremskräfte an der angetriebenen Achse so erhöht werden, dass ein Schieben des Fahrzeugs über die nicht angetriebene Achse und ein Durchdrehen der Räder der angetriebenen Achse verhindert ist und eine vor dem Bremseingriff durch die Betriebsbremse ausgeübte Haltekraft für das Fahrzeug erhalten bleibt.

2. Verfahren nach Anspruch 1, **dadurch gekennzeichnet, dass** am Kraftfahrzeug wirkende Achslasten über eine automatische lastabhängige Bremskraftregelung zur Steuerung des Bremseingriffs zur Verfügung gestellt werden.

3. Verfahren nach Anspruch 1 oder 2, **dadurch gekennzeichnet, dass** als hydraulischer Drehmomentwandler eine Wandlerschaltkupplung oder ein Wandlergetriebe verwendet wird.

4. Verfahren nach Anspruch 1 bis 3, **dadurch gekennzeichnet, dass** die Bremskräfte an der angetriebenen Achse derart um einen Bremskraftbetrag erhöht werden, dass eine vom Antriebsmotor über den Antriebsstrang mit hydraulischem Drehmomentwandler auf die Räder der angetriebenen Achse übertragene Antriebskraft zumindest teilweise kompensiert und dass die auf die Räder der nicht angetriebenen Achse wirkende Bremskraft um den gleichen Bremskraftbetrag reduziert wird.

5. Verfahren nach einem der Ansprüche 1 bis 4, **dadurch gekennzeichnet, dass** die Betriebsbremse auf wenigstens zwei Vorderachsen und/oder auf wenigstens zwei Hinterachsen einwirkt.

6. Verfahren nach einem der Ansprüche 1 bis 5, **dadurch gekennzeichnet, dass** der Bremseingriff mittels eines zentralen Fahrzeug-Führungsrechners gesteuert und/oder geregelt wird.

7. Verfahren nach einem der Ansprüche 1 bis 6, **dadurch gekennzeichnet, dass** als Betriebsbremse eine elektropneumatische Bremsanlage verwendet wird.

8. Verfahren nach einem der Ansprüche 1 bis 6, **dadurch gekennzeichnet, dass** als Betriebsbremse eine elektrohydraulische Bremsanlage verwendet wird.

9. Verfahren nach einem der Ansprüche 1 bis 8, **dadurch gekennzeichnet, dass** der Bremseingriff vor dem Anfahren des Kraftfahrzeugs und/oder sobald sich das Fahrzeug mit Schrittgeschwindigkeit bewegt, vorgenommen wird.

10. Verfahren nach einem der Ansprüche 1 bis 8, **dadurch gekennzeichnet, dass** der Bremseingriff beim Einlegen eines Ganges vor dem Anfahren des Kraftfahrzeugs und/oder sobald sich das Fahrzeug mit einer Geschwindigkeit von weniger als 20 km/h bewegt, vorgenommen wird.

11. Verfahren nach einem der Ansprüche 1 bis 10, **dadurch gekennzeichnet, dass** bei einem Gangwechsel die Bremskräfte an wenigstens einer Achse um einen Betrag erhöht werden, der dem auf die angetriebene Achse übertragenen Antriebsmoment entspricht.

**12.** Verfahren nach einem der Ansprüche 1 bis 11, **dadurch gekennzeichnet, dass** bei einem Gangwechsel die Summe der an den Achsen angelegten Bremskräfte um einen Betrag erhöht wird, der dem auf die angetriebene Achse übertragenen Antriebsmoment entspricht.

**13.** Vorrichtung zur Bremskraftregelung eines Kraftfahrzeugs zur Durchführung eines Verfahrens nach einem der vorhergehenden Ansprüche, mit einer Betriebsbremse, mit einer nicht angetriebene Achse, mit einer von einer Antriebseinheit mittels eines Antriebsstrangs angetriebenen Achse sowie mit einem hydraulischen Drehmomentwandler, der im Antriebsstrang angeordnet ist, wobei ein Bremseingriff mit der Betriebsbremse achs- und/oder radbezogen durchführbar ist, und wobei die an der angetriebenen Achse vorgesehenen Räder unabhängig von den an der nicht angetriebenen Achse vorgesehenen Räder mit einer Bremskraft beaufschlagbar sind, **dadurch gekennzeichnet, dass**, sobald ein Antriebsmotor bei Stillstand oder bei langsamer Fahrt des Kraftfahrzeugs antreibend über den Antriebsstrang auf die angetriebene Achse wirkt, in Abhängigkeit von einer Bremsanforderung die Bremskräfte zwischen Fahrbahn und Rad an den Rädern der nicht angetriebenen Achse so verringerbar und die Bremskräfte an der angetriebenen Achse so erhöhbar sind, dass ein Schieben des Fahrzeugs über die nicht angetriebene Achse und ein Durchdrehen der Räder der angetriebenen Achse verhindert ist und eine vor dem Bremseingriff durch die Betriebsbremse ausgeübte Haltekraft für das Fahrzeug erhalten bleibt.

## Claims

**1.** Method for braking a motor vehicle which has a service brake, a non-driven axle, an axle which is driven by a drive unit by means of a drivetrain, and a hydraulic torque converter which is arranged in the drivetrain, wherein a braking intervention is carried out with the service brake in an axle-related and/or wheel-related fashion, and the wheels provided on the driven axle are supplied with a braking force independently of the wheels provided on the non-driven axle, **characterized in that** as soon as a drive motor acts in a driving fashion on the driven axle via the drivetrain in the case of a stationary state or in the case of slow travel of the motor vehicle, the braking intervention is performed as a function of a braking request in such a way that the braking forces between the underlying surface and the wheel are reduced at the wheels of the non-driven axle, and the braking forces at the driven axle are increased, in such a way that the vehicle is prevented from sliding over the non-driven axle, and the wheels of the driven axle are prevented from spinning, and a holding force for the vehicle which is applied by the service brake before the braking intervention is maintained.

**2.** Method according to Claim 1, **characterized in that** axle loads acting on the motor vehicle are made available via an automatic load-dependent braking force regulator, in order to control the braking intervention.

**3.** Method according to Claim 1 or 2, **characterized in that** a torque converter clutch or a converter transmission is used as the hydraulic torque converter.

**4.** Method according to Claim 1 to 3, **characterized in that** the braking forces at the driven axle are increased by a braking force amount in such a way that a driving force which is transmitted to the wheels of the driven axle from the drive motor via the drivetrain with the hydraulic torque converter is at least partially compensated, and **in that** the braking force acting on the wheels of the non-driven axle is reduced by the same braking force amount.

**5.** Method according to one of Claims 1 to 4, **characterized in that** the service brake acts on at least two front axles and/or on at least two rear axles.

**6.** Method according to one of Claims 1 to 5, **characterized in that** the braking intervention is open-loop and/or closed-loop controlled by means of a central vehicle control computer.

**7.** Method according to one of Claims 1 to 6, **characterized in that** an electropneumatic braking system is used as the service brake.

**8.** Method according to one of Claims 1 to 6, **characterized in that** an electrohydraulic braking system is used as the service brake.

**9.** Method according to one of Claims 1 to 8, **characterized in that** the braking intervention is performed before the starting of the motor vehicle and/or as soon as the vehicle moves at a crawling pace.

10. Method according to one of Claims 1 to 8, **characterized in that** the braking intervention is performed when a gear is engaged before the starting of the motor vehicle and/or as soon as the vehicle moves at a speed of less than 20 km/h.

11. Method according to one of Claims 1 to 10, **characterized in that** when there is a gear change the braking forces at at least one axle are increased by an amount which corresponds to the drive torque transmitted to the driven axle.

12. Method according to one of Claims 1 to 11, **characterized in that** when there is a gear change the sum of the braking forces applied at the axles is increased by an amount which corresponds to the drive torque transmitted to the driven axle.

13. Device for regulating the braking force of a motor vehicle for carrying out a method according to one of the preceding claims, having a service brake, having a non-driven axle, having an axle which is driven by a drive unit by means of a drivetrain, and having a hydraulic torque converter which is arranged in the drivetrain, wherein a braking intervention can be carried out with the service brake in an axle-related and/or wheel-related fashion, and wherein the wheels which are provided on the driven axle can be supplied with a braking force independently of the wheels provided on the non-driven axle, **characterized in that** as soon as a drive motor acts in a driving fashion on the driven axle via the drivetrain in the case of a stationary state or in the case of slow travel of the motor vehicle, as a function of a braking request, the braking forces between the underlying surface and the wheel can be reduced at the wheels of the non-driven axle, and the braking forces at the driven axle can be increased, in such a way that the vehicle is prevented from sliding over the non-driven axle, and the wheels of the driven axle are prevented from spinning, and a holding force for the vehicle which is applied by the service brake before the braking intervention is maintained.

## Revendications

1. Procédé destiné au freinage d'un véhicule automobile, qui dispose d'un frein de service, d'un essieu non entraîné, d'un essieu entraîné par une unité d'entraînement au moyen d'une chaîne cinématique ainsi que d'un convertisseur de couple hydraulique qui est disposé dans la chaîne cinématique, une intervention de freinage par le frein de service s'effectuant par rapport à l'essieu et/ou par rapport aux roues et les roues prévues sur l'essieu entraîné étant sollicitées avec une force de freinage indépendamment des roues prévues sur l'essieu non entraîné, **caractérisé en ce que** dès qu'un moteur d'entraînement, tournant à l'arrêt ou en conduite au ralenti du véhicule automobile, agit par le biais de la chaîne cinématique sur l'essieu entraîné, l'intervention de freinage est effectuée en fonction d'une demande de freinage, de telle sorte que les forces de freinage entre la chaussée et la roue au niveau des roues de l'essieu non entraîné soient réduites et que les forces de freinage au niveau de l'essieu entraîné soient augmentées, de telle sorte qu'un glissement du véhicule par le biais de l'essieu non entraîné et un patinage des roues de l'essieu entraîné soient évités et qu'une force de retenue du véhicule exercée avant l'intervention de freinage par le frein de service soit maintenue.

2. Procédé selon la revendication 1, **caractérisé en ce que** les charges à l'essieu agissant sur le véhicule automobile sont fournies par le biais d'une régulation de force de freinage automatique dépendant de la charge pour commander l'intervention de freinage.

3. Procédé selon la revendication 1 ou 2, **caractérisé en ce que** l'on utilise en tant que convertisseur de couple hydraulique un embrayage à convertisseur ou un mécanisme convertisseur.

4. Procédé selon la revendication 1 à 3, **caractérisé en ce que** les forces de freinage appliquées à l'essieu entraîné sont augmentées d'une valeur de force de freinage telle qu'une force d'entraînement transmise aux roues de l'essieu entraîné par le moteur d'entraînement par le biais de la chaîne cinématique avec un convertisseur de couple hydraulique soit au moins en partie compensée et que la force de freinage agissant sur les roues de l'essieu non entraîné soit réduite de la même valeur de force de freinage.

5. Procédé selon l'une quelconque des revendications 1 à 4, **caractérisé en ce que** le frein de service agit sur au moins deux essieux avant et/ou sur au moins deux essieux arrière.

6. Procédé selon l'une quelconque des revendications 1 à 5, **caractérisé en ce que** l'intervention de freinage est commandée et/ou réglée au moyen d'un régulateur maître central du véhicule.

7. Procédé selon l'une quelconque des revendications 1 à 6, **caractérisé en ce que** l'on utilise en tant que frein de service une installation de freinage électropneumatique.

8. Procédé selon l'une quelconque des revendications 1 à 6, **caractérisé en ce que** l'on utilise en tant que frein de service une installation de freinage électrohydraulique.

9. Procédé selon l'une quelconque des revendications 1 à 8, **caractérisé en ce que** l'intervention de freinage est effectuée avant le démarrage du véhicule automobile et/ou dès que le véhicule se déplace à la vitesse de marche.

10. Procédé selon l'une quelconque des revendications 1 à 8, **caractérisé en ce que** l'intervention de freinage est effectuée lors de l'enclenchement d'une vitesse avant le démarrage du véhicule automobile et/ou dès que le véhicule se déplace à une vitesse inférieure à 20 km/h.

11. Procédé selon l'une quelconque des revendications 1 à 10, **caractérisé en ce qu'**en cas de changement de vitesses, les forces de freinage au niveau d'au moins un essieu sont augmentées d'une valeur qui correspond au couple d'entraînement transmis à l'essieu entraîné.

12. Procédé selon l'une quelconque des revendications 1 à 11, caractérisé en ce sens qu'en cas de changement de vitesses, la somme des forces de freinage appliquées aux essieux est augmentée d'une valeur qui correspond au couple d'entraînement transmis à l'essieu entraîné.

13. Dispositif de régulation de force de freinage d'un véhicule automobile pour mettre en oeuvre un procédé selon l'une quelconque des revendications précédentes, comprenant un frein de service, un essieu non entraîné, un essieu entraîné par une unité d'entraînement au moyen d'une chaîne cinématique ainsi qu'un convertisseur de couple hydraulique qui est disposé dans la chaîne cinématique, une intervention de freinage pouvant être effectuée avec le frein de service par rapport à l'essieu et/ou par rapport aux roues et les roues prévues sur l'essieu entraîné pouvant être sollicitées avec une force de freinage indépendamment des roues prévues sur l'essieu non entraîné, **caractérisé en ce que** dès qu'un moteur d'entraînement, tournant à l'arrêt ou en conduite au ralenti du véhicule automobile, agit par le biais de la chaîne cinématique sur l'essieu entraîné, en fonction d'une demande de freinage, les forces de freinage entre la chaussée et la roue au niveau des roues de l'essieu non entraîné peuvent être réduites et les forces de freinage au niveau de l'essieu entraîné peuvent être augmentées, de telle sorte qu'un glissement du véhicule par le biais de l'essieu non entraîné et un patinage des roues de l'essieu entraîné soient évités et qu'une force de retenue du véhicule exercée avant l'intervention de freinage par le frein de service soit maintenue.

$F_{HA\,opt}$

$F_{VA\,opt}$

$F_{HA} + F_{VA}$

11

12

15

10

16

BP-position [rel.]

Fzg. wird gebremst oder steht

$F_{aus\ Mwandler}$

„a"

„a"

„b"

23

23

16

14

Leerweg

Fzg. rollt

F [rel.] [N]

antreibend    bremsend

Fig. 1

10

Fig. 2

$M_{\text{Wandler an Nabe}}$

$p_{\text{Brems}}$

$M_{\text{Brems}}$

$F_{\text{aus Mwandler}}$

$F_{\text{Brems}}$

$F_{\text{resultierend}}$

**Fig. 3**

| Mot | | W | | G | | HA | — $M_{\text{Wandler an Nabe}}$ |

**Fig. 4**

**IN DER BESCHREIBUNG AUFGEFÜHRTE DOKUMENTE**

**In der Beschreibung aufgeführte Patentdokumente**

- DE 19958324 A1
- JP 2002160614 A